(19) Europäisches Patentamt
European Patent Office
Office européen des brevets

(11) **EP 4 563 971 A1**

(12) **EUROPEAN PATENT APPLICATION**

(43) Date of publication:
**04.06.2025 Bulletin 2025/23**

(21) Application number: **23315444.2**

(22) Date of filing: **29.11.2023**

(51) International Patent Classification (IPC):
*G01N 13/02* $^{(2006.01)}$

(52) Cooperative Patent Classification (CPC):
**G01N 13/02;** G01N 2013/0208

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Centre National de la Recherche Scientifique**
**75016 Paris (FR)**
• **La Rochelle Université**
**17071 La Rochelle Cedex 9 (FR)**

• **Université d'Aix-Marseille**
**13007 Marseille (FR)**

(72) Inventors:
• **Millet, Olivier**
**17000 La Rochelle (FR)**
• **Medale, Marc**
**13820 Ensuès la Redonne (FR)**

(74) Representative: **Hautier IP**
**20, rue de la Liberté**
**06000 Nice (FR)**

(54) **DEVICE AND METHOD FOR IDENTIFYING WETTING PROPERTIES VIA A LIQUID CAPILLARY BRIDGE**

(57) The invention consists of the development of a device for identifying wetting properties via a liquid capillary bridge made of said liquid, placed between two parallel and horizontal plates. The device semi-automatically creates capillary bridges at controlled pressure or volume, then takes high-resolution photographs, and then continues with the identification of wetting properties (solid-liquid and solid-gas surface tensions, as well as line energy). The proposed original model is based on the equations which derive from the minimization of the energy of the liquid capillary bridge which consists of the interfacial surface energies and if needed the line energy, and this in a geometric configuration characterized by a symmetry of revolution. The added value of the proposed device and method consists in allowing defining experimental protocols which lead to a more precise identification of properties, notably in cases where the gravity is negligible.

FIG. 1

**Description**

**TECHNICAL FIELD**

The disclosure relates broadly to the development of a system and an associated method for identifying wetting properties via a liquid capillary bridge.

The invention finds applications in the field of coating(s), deposit(s) of paint(s), surface treatment(s), glass(es) (particularly for self-cleaning glazing), glue(s), etc.

**BACKGROUND**

The partial wetting of a surface by a liquid, immersed in a fluid environment (immiscible liquid or gas), characterizes the propensity of this liquid to spread over this surface. This property is central in the unfolding of numerous industrial processes based on natural processes, such as spreading of raindrops on a surface (particularly on a glazing), etc. and their industrial implementations, such as coatings, adhesion of deposits on substrate, paint, glue, etc.

Furthermore, the characterization or identification of partial wetting properties is somewhat of a canonical problem in physics, because it involves quantities that cannot be measured directly and independently. Indeed, solid-liquid and solid-gas surface energies are generally identified by means of models or constitutive relationships, the inputs of which are usually only combinations of the physical properties sought. In a partial wetting problem, as much as four material properties must ideally be identified: three surface energies (solid-liquid, liquid-fluid and solid-fluid), as well as the energy of the solid-liquid-gas zone (three-phase- zone), hereinafter referred to as line energy, since it can be located along the macroscopic scale on the three-phase contact line (or triple line).

Young's equation proposed more than two hundred years ago is probably the most widely used to identify wetting properties. Indeed, it directly links the macroscopic wetting angle to the surface energies of the solid-fluid, solid-liquid and liquid-fluid interfaces, respectively denoted $\gamma_{sg}$, $\gamma_{sl}$ and $\gamma_{lg}$, in:

$$\gamma_{sg} - \gamma_{sl} = \gamma_{lg} \cos\theta,$$

where $\theta$ is the macroscopic angle of wetting of the liquid on the substrate.

The identification of wetting properties from the Young's equation raises some questions related to its domain of validity, because it takes into account neither the gravity effects nor those of line energy, whereas these can in certain cases influence the result.

On the one hand, one way to minimize the influence of gravity effects is to do the experiments with small volumes of liquid, but in this case, the line energy can be non-negligible.

On the other hand, if we want to consider configurations where the line energy is negligible compared to the surface energies, it is then appropriate to consider large wetted radius (so, large volumes of liquid), but in this case, the effects of gravity become important and can be non-negligible.

The present disclosure aims at providing a solution for creating capillary bridges in a semi-automatic manner, then for taking of high-resolution photographs, and then for identifying the corresponding wetting properties (solid-liquid and solid-gas surface tensions, as well as, if needed, the line energy).

**SUMMARY**

According to a first aspect of the present invention, disclosed is a device for identifying wetting properties via a liquid capillary bridge made of said liquid, the device comprising:

- two parallel and horizontal plates,
- a micro-positioning system configured to adjust a spacing between said two plates,
- a telecentric light source configured to illuminate the spacing between the two plates,
- a high-resolution camera configured to be sensibly oriented towards said spacing in an opposite direction relative to an optical axis of said telecentric light, and
- a central processing unit that may comprise at least one (micro)processor and a non-transitory computer readable medium,

    a top plate among said two plates being configured together with said micro-positioning system for adjusting a distance D between said two plates,
    the high-resolution camera being configured for providing, to the central processing unit, at least one image of the liquid capillary bridge formed between said two plates, and

the processing unit being configured to identify, in function of said at least one image and according to a model derived from a minimization of free energy of a liquid capillary bridge made of said liquid, with a fixed parameter chosen from among a volume V and a capillary pressure $\Delta P$ of the liquid capillary bridge, with $\Delta P = P_l - P_f$ where $P_l$ is the pressure of the liquid of the liquid capillary bridge and $P_f$ is the pressure of the fluid surrounding the liquid capillary bridge, at least the difference $\gamma_{sg} - \gamma_{sl}$ between the surface energy of the solid-fluid and the surface energy of the solid-liquid from among said wetting properties of the liquid, with said fluid surrounding the liquid capillary bridge.

In some examples, the device further comprises a microbalance, a bottom plate among said two plates being fixed on the microbalance that is configured to measure a weight of the formed liquid capillary bridge between said two plates.

In some examples, at least one, preferably both, of said two plates is made of at least one among glass, steel and Teflon®.

In some examples, at least one, preferably both, of said two plates is rigid.

In some examples, at least one, preferably both, of said two plates is impermeable to said liquid.

In some examples, the liquid capillary bridge is supposed to be symmetrical with respect to its generatrix and with respect to median plane between said two plates.

In some examples, the device further comprises a secondary camera configured to be sensibly oriented towards said spacing in an unaligned direction relative to the optical axis of said telecentric light source, the secondary camera being configured for providing, to the central processing unit, at least one image of the liquid capillary bridge formed between said two plates, the processing unit being configured to identify difference $\gamma_{sg} - \gamma_{sl}$ between the surface energy of the solid-fluid and the surface energy of the solid-liquid further in function of said at least one image provided by said secondary camera. According to this example, the secondary camera may allow the processing unit to determine the position of the liquid capillary bridge and that of its generatrix relative to said two plates. Furthermore, said secondary camera may also allow the processing unit to estimate a deviation from theory, by comparing the properties of the liquid capillary bridge as pictured by the high-resolution camera and as pictured by the secondary camera.

In some examples, the device further comprises a device for controlling capillary pressure of the liquid capillary bridge, said device comprising a tank into which the height of liquid is adjustable so that the difference in height between the liquid level in the tank and that of the bridge corresponds always to the desired difference in pressure $\Delta p = \rho g \Delta h$, where h represents the difference between the liquid level in the tank and that of the upper surface of the bottom plate. According to this example, the device is advantageously cheap.

According to a second aspect, disclosed is a method for identifying wetting properties via a liquid capillary bridge made of said liquid, the method implementing a device according to anyone of the preceding claims and comprising the following steps:

a. deposit a volume $V_0$ of liquid between the two plates of said device maintained at a distance D from each other to form a symmetrical capillary bridge;

b. take at least one image of the capillary bridge; and

c. deduce, from said at least one image and by using a model derived from a minimization of free energy of a liquid capillary bridge made of said liquid, with a fixed parameter chosen from among a volume $V_0$ and a capillary pressure $\Delta P$ of the liquid capillary bridge, with $\Delta P = P_l - P_f$ where $P_l$ is the pressure of the liquid of the liquid capillary bridge and $P_f$ is the pressure of the fluid surrounding the liquid capillary bridge, at least the difference $\gamma_{sg} - \gamma_{sl}$ between the surface energy of the solid-fluid $\gamma_{sg}$ and the surface energy of the solid-liquid $\gamma_{sl}$ from among said wetting properties of the liquid, with said fluid surrounding the liquid capillary bridge.

In some examples, the step of deducing said difference $\gamma_{sg} - \gamma_{sl}$ between the surface energy of the solid-fluid $\gamma_{sg}$ and the surface energy of the solid-liquid $\gamma_{sl}$ comprises the measurement of the value of at least one of the macroscopic wetting angles $\theta_1$ and $\theta_2$ at the top plate and at the bottom plate, where $\theta_1$ may be supposed to be sensibly equal to $\theta_2$, in function of which said difference $\gamma_{sg} - \gamma_{sl}$ is deduced using said derived model, with the surface tension between the liquid and the gas $\gamma_{lg}$ being known.

In some examples, the step of deducing said difference $\gamma_{sg} - \gamma_{sl}$ between the surface energy of the solid-fluid $\gamma_{sg}$ and the surface energy of the solid-liquid $\gamma_{sl}$ further comprises the measurement of at least one among: a gorge radius y* and at least one wetting radius $y_{c1}$ and $y_{c2}$ of the liquid capillary bridge at the level of the $i^{th}$ plate among the top plate and the bottom plate, where $y_{c1}$ and $y_{c2}$ are supposed to be sensibly equal to each other, and relative to a generatrix of the liquid capillary bridge.

In some examples, the volume $V_0$ is comprised in between 1 and 10 $\mu$l, preferably in between 1 and 5 $\mu$l According to this example, the influence of gravity effects is minimized.

In some examples, the volume $V_0$ is comprised in between 50 and 150 $\mu$l, preferably in between 100 and 150 $\mu$l.

According to this example, the line energy is negligible.

In some examples, the distance D between the plates and is comprised in between 0.5 and 5 mm, preferably in between 0.5 and 3 mm. According to this example, the influence of gravity effects is minimized, even for volumes $V_0$ of liquid comprised in between 50 and 150 $\mu$l, preferably in between 100 and 150 $\mu$l.

According to the two last examples, the measurement by image processing makes it possible to precisely identify the difference between the surface tensions $\gamma_{sl}$ - $\gamma_{sg}$, the liquid-gas surface tension $\gamma_{lg}$ being known elsewhere.

In some examples, during step a., the volume $V_0$ is comprised in between 0.5 and 10 ml, preferably in between 0.1 and 3 $\mu$l, and further comprising, after the deduction step:

- deposit a volume $V_0$ of liquid comprised in between 1 and 10 $\mu$l, preferably in between 1 and 5 $\mu$l between the two plates of said device **(100)** maintained at the distance $D$ from each other to form another symmetrical capillary bridge;
- take at least one another image of said another capillary bridge; and
- deduce, from said at least one another image and by using said derived model and the difference $\gamma_{sg}$ - $\gamma_{sl}$ between the surface energy of the solid-fluid $\gamma_{sg}$ and the surface energy of the solid-liquid $\gamma_{sl}$ as previously deduced, at least one among a line energy and a triple-line tension $\gamma_{slg}$ among said wetting properties of the liquid.

In some examples, said derived model is given by the following equation:

$$\cos(\theta) = \frac{\gamma_{sg} - \gamma_{sl}}{\gamma_{lg}} \pm \frac{\gamma_{slg}}{y(x_c)\gamma_{lg}} = 0,$$

where $\gamma_{sg}$ is the surface energy of the solid-fluid, $\gamma_{sl}$ is the surface energy of the solid-liquid, $\gamma_{slg}$ is the triple-line tension, where $\theta = \theta_1 = \theta_2$ is a macroscopic wetting angle of the capillary bridge at the top plate and at the bottom plate, and where $y(x_c) = y(-x_c) = y_c = y_{c_1} = y_{c_2}$ is a wetting radius of the liquid capillary bridge as measured at the level of the top plate and/or at the level of the bottom plate and relative to a generatrix of the liquid capillary bridge.

In some examples, the method further comprises at least one of the following steps, after the deposition step:

- bring closer the plates to each other to reduce the distance D and to achieve an enlarged wetting radius $y_c$ relative to the radius of the previously formed symmetrical capillary bridge; and
- let the capillary bridge dry between the two plates placed at a fixed distance D, typically comprised in between 0.5 and 5 mm, preferably in between 0.5 and 3 mm,

the step being repeated during at least one among the reduction of the distance $D$ and the drying of the liquid capillary bridge for deducing at least one averaged difference $\gamma_{sg}$ - $y_{sl}$ between the surface energy of the solid-fluid $\gamma_{sg}$ and the surface energy of the solid-liquid $\gamma_{sl}$.

In some examples, the method further comprises the following step:

- repeat steps of the method as introduced above with various volumes $V_0$ of the liquid capillary bridge;
- calculate an average value of the hence deduced differences $\gamma_{sg}$ - $\gamma_{sl}$ between the surface energy of the solid-fluid $\gamma_{sg}$ and the surface energy of the solid-liquid $\gamma_{sl}$.

In some examples, a distance D between the plates is comprised in between 0.5 and 5 mm, preferably in between 0.5 and 3 mm, with volumes $V_0$ of the liquid capillary bridge, typically comprised in between 1 and 150 $\mu$l.

A third aspect of the present disclosure relates to a non-transitory computer readable medium storing instructions, which, when implemented by at least one digital processing device, performs at least the steps of the method according the first aspect of the invention and/or the steps of the method according the second aspect of the invention. In addition or as an alternative, the present disclosure relates to a computer program product comprising instructions which, when implemented by at least one digital processing device, performs or controls at least the steps of the method according the second aspect of the invention, if needed except the deposition step(s).

A fourth aspect of the present disclosure relates to a use of a device according to the first aspect of the invention for implementing the method according to the second aspect of the invention.

Other objects, features and advantages of the invention(s) disclosed herein, and their various embodiments/aspects, may become apparent in light of the description of some exemplary embodiments that follows.

## BRIEF DESCRIPTION OF THE DRAWINGS

Reference will be made in detail to embodiments of the disclosure, non-limiting examples of which may be illustrated in the figures of the accompanying drawings. Some figures may be in the form of diagrams. Some elements in the figures may be exaggerated; others may be omitted, for illustrative clarity.

Any text (legends, notes, reference numerals and the like) appearing on the drawings may be incorporated herein by reference.

Figure 1 is a schematic cartesian representation of an axisymmetric capillary bridge with a convex meridian between two parallel planes;

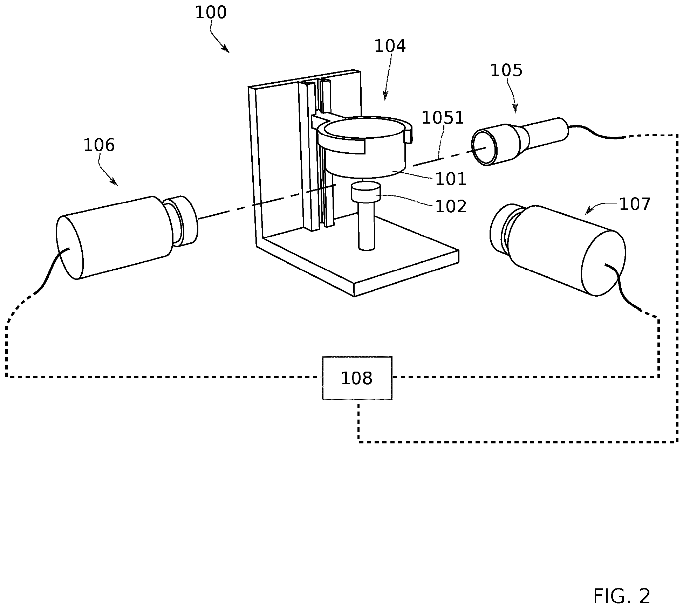

Figure. 2 is a schematic representation of an embodiment of the device according to the first aspect of the invention that is used to carry out evaporation and separation experiments on capillary bridges and water drops;

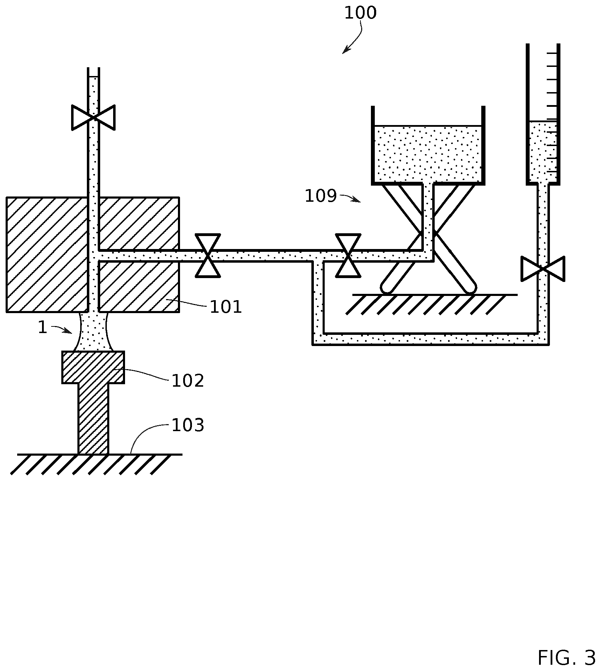

Figure. 3 is a is a schematic representation of an embodiment of the device according to the first aspect of the invention that is used to impose capillary pressure; and

Figure. 4 is a flowchart of an embodiment of the method according to the second aspect of the invention, where boxes in long dashes stand for optional steps.

## DETAILED DESCRIPTION

Note that the term 'rigid' depicts a quality of at least one, preferably both, of the two plates specifying that said plate(s) is(are) not deformable under the action of the capillary forces observed at the interfaces between said plate(s) and the liquid.

In order to mitigate the effects of gravity on the identification of wetting properties, it is here proposed to consider liquid capillary bridges between two parallel planes, made of the liquid the wetting properties of which have to be identified. Compared to sessile drops approaches, the proposed device and method make it possible, for a same volume of liquid, to almost double the contact surface effects compared to gravity effects, and thus to reduce the relative influence of the latter compared to the interfacial effects.

Thus, one of the originalities of the here proposed device and method for identifying wetting properties is based on a configuration of a liquid capillary bridge between two parallel and horizontal plates. It should be noted that the plates are sufficiently rigid to remain undistorted despite the formation of the capillary bridge. The method for identifying these wetting properties is traditionally based on image processing. However, the proposed device and method take advantage of an original model which makes it possible to identify the solid-liquid and solid-gas surface tensions, as well as the line energy, where the fluid environment is supposed to be a gas without excluding that it can also be a non-miscible fluid.

The equations of the original model come from the minimization of the free energy of the liquid capillary bridge (consisting of the surface and line interfacial energies), in a geometry with symmetry of revolution (the axis of the liquid capillary bridge is aligned with gravity). This approach makes it possible to get not only the Young-Laplace equation, which describes the differential equation of the liquid-gas interface, but also a generalization of the Young's equation for a liquid capillary bridge between two parallel and horizontal plates.

As will become clear from reading the following by reference to the appended figures, the invention thus consists of the development of a device 100 and method 200 for creating capillary bridges with controlled pressure or volume, on which high resolution images are taken, which are then used for identifying wetting properties of the liquid the capillary bridge is made of between two chosen plates, by using the above mentioned model. The main contribution of the device 100 and method 200 according to the present invention may be considered as based on the ability to define at least one experimental protocol that leads to better, more particularly to more precise, identification of properties, notably in cases where gravity is negligible.

<u>Minimization of the energy of a capillary bridge between two parallel planes at imposed pressure</u>

<u>Energy of a capillary bridge between two parallel planes at imposed pressure</u>

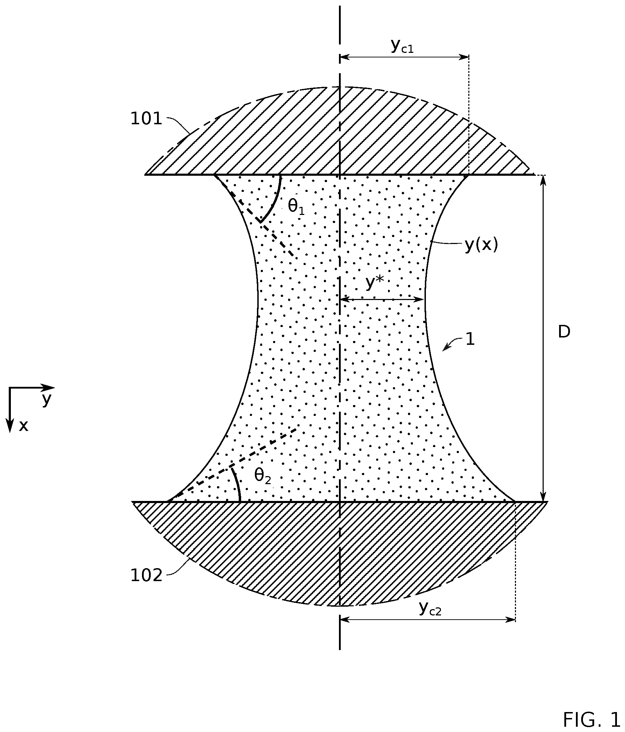

Before establishing the equation for the total energy of the system, and with reference to Fig. 1, it is useful to define some geometric parameters of an axisymmetric capillary bridge 1 of revolution between two horizontal and parallel planes 101 and 102:

- the total volume of the liquid capillary bridge 1 between two planes 101 and 102 is given by the following equation:

$$V = \int_{\Omega} dV = \int_{-x_c}^{x_c} \pi y(x)^2 dx \qquad (1)$$

where $-x_c$ ans $x_c$ are the minimum and maximum coordinates of the $y(x)$ function, respectively;
- the liquid-gas surface area is given by the following equation:

$$A_{lg} = \int_{-x_c}^{x_c} 2\pi y(x)\sqrt{1 + y'^2}\,dx \qquad (2)$$

where $y' = dy/dx$;
- the liquid-solid surfaces (taking into account that of the top and bottom ones) is given by the following equations:

$$A_{sl1} = 2\pi y_{c1}{}^2 \text{ and } A_{sl2} = 2\pi y_{c2}{}^2 \qquad (3)$$

where $y_{c1}$ et $y_{c2}$ the wetted radius $y(\pm x_c)$ at lower and upper planes, respectively, are supposed to be equal to each other when the gravity effects are negligible and the plates are made of the same material; and
- the lengths of the triple lines (taking into account the top and bottom) are supposed to be equal to each other when the gravity effects are negligible and the plates are made of the same material, that is when $y_{c1} = y_{c2}$ and are given by the following equations:

$$L_{slg1} = 4\pi y_{c1} \text{ and } L_{slg2} = 4\pi y_{c2} \qquad (4)$$

The total energy of the liquid capillary bridge 1 in the limit of negligible gravity effect and if needed for plates made of the same material is written as follows by considering all the interfacial energies (including the line energy) and with capillary pressure imposed:

$$E = -\Delta P \int_{\Omega} dV + \gamma_{lg} \int_{\partial\Omega_{lg}} dA_{lg} + \left(\gamma_{sl} - \gamma_{sg}\right)\int_{\partial\Omega_{sl}} dA_{sl} \pm \gamma_{slg} L_{slg} \qquad (5)$$

Or equivalently:

$$E = -\Delta P\, V + \gamma_{lg}\, A_{lg} + \left(\gamma_{sl} - \gamma_{sg}\right)A_{sl} \pm \gamma_{slg} L_{slg} \qquad (6)$$

Note that not only was the capillary pressure $\Delta P = P_{liq} - P_{air}$ considered constant in the liquid, but also that the solid-liquid surface and line density of energy $\gamma_{sl}, \gamma_{sg}, \gamma_{lg}$ and the triple line energy $\gamma_{slg}$ are constant. Note also that the $\pm$ sign in equation (6) accounts for "advancing" triple lines (+ sign) or "receding" triple lines (- sign), depending on whether the liquid spreads or returns to a dry or wet surface, respectively.

Minimization of the total energy

To minimize the energy given by at constant $\Delta P$ and leaving $V$ and $y_c$ variable for a capillary bridge 1 between two planes 101 and 102, the variation $\delta E$ of this energy may be written:

$$\delta E = -\delta(\Delta P\, V) + \gamma_{lg}\, \delta A_{lg} + \left(\gamma_{sl} - \gamma_{sg}\right)\delta A_{sl} \pm \gamma_{slg}\delta L_{slg} \qquad (7)$$

After some algebra, we obtain when $y_{c1} = y(x_c)$ and $y_{c2} = y(-x_c) = y(x_c)$ by symmetry :

$$\delta E = \int_{-x_c}^{x_c}\left(-\Delta P\, y(x) + \gamma_{lg}\left(\frac{1 + y'^2 - yy''}{\left(1 + y'^2\right)^{3/2}}\right)\right)\delta y\, dx + 2\, y(x_c)\left(\gamma_{lg}\frac{y'(x_c)}{\sqrt{1 + y'(x_c)^2}} + \gamma_{sl} - \right.$$

$$\left. \gamma_{sg} \pm \frac{\gamma_{slg}}{y(x_c)}\right)\delta y(x_c) = 0 \qquad (8)$$

where the symmetry of the liquid capillary bridge 1 was taken into account.
Equation (8) must be valid whatever $\delta y$ and $\delta y_c$. To begin with, we choose configurations where $\delta y_c = 0$, i.e. with a fixed triple line. We thus achieve two equations; the first one is the classic Young-Laplace equation in the absence of gravity effects:

$$\frac{y''}{\left(1+y'^2\right)^{3/2}} - \frac{1}{y(x)\sqrt{1+y'^2}} = -\frac{\Delta P}{\gamma_{lg}} \qquad (9)$$

Generalized Young's equation

The second term of equation (8) implies:

$$\frac{y'(x_c)}{\sqrt{1+y'(x_c)^2}} + \frac{\gamma_{sl}-\gamma_{sg}}{\gamma_{lg}} \pm \frac{\gamma_{slg}}{y(x_c)\gamma_{lg}} = 0 \qquad (10)$$

The energy minimization leads to a generalized Young's equation originating from the boundary condition terms:

$$\cos(\theta) = \frac{\gamma_{sg}-\gamma_{sl}}{\gamma_{lg}} \pm \frac{\gamma_{slg}}{y(x_c)\gamma_{lg}} = 0 \qquad (11)$$

where the last term comes from the line energy.

Minimization of the energy of a capillary bridge between two parallel planes at constant volume

We repeat the same calculations considering the energy:

$$E = \gamma_{lg}\, A_{lg} + \left(\gamma_{sl} - \gamma_{sg}\right)A_{sl} \pm \gamma_{slg}\, L_{slg} + \lambda(V - V_0)$$

with the Lagrange multiplier $\lambda$ translating the imposed volume condition $V_0$. The here above calculations are copied with $\lambda$ instead of $-\Delta P$ and the conclusions are the same, we obtain the same generalized Young's equation (11).

Experimental protocols

An overview of the experimental protocols is firstly given below, then two envisaged alternatives, depending on whether we impose, as a constant either, the volume of the capillary bridge 1 or the difference between capillary and ambient pressures.

General description of the experimental protocols

The experimental protocols are preferably based on a series of identifications carried out on the basis of the generalized Young's equation obtained in (11). The last term contains the line energy which is proportional to the triple-line tension $\gamma_{slg}$. Even if the surface tension between the liquid and the gas $\gamma_{lg}$ can be measured in a fairly traditional way (by the hanging drop test for example), we cannot have direct access to the surface tensions $\gamma_{sl}$ and $\gamma_{sg}$. It can only be accessed indirectly by identification thanks to a model.

However, identification from the classical Young's equation, (where the line energy term is dropped), is only valid in configurations where this last term can actually be neglected, and when the gravity effects are negligible.

To minimize the influence of gravity effects, it is preferred to carry out the experiments for small volumes of liquid, typically comprised in between 1 and 10 μl, preferably in between 1 and 5 μl, but in this case relative contribution of line energy can be non-negligible. Not taking the line energy into account distorts the results and interpretation of the measurements.

If, on the contrary, we want to be in configurations where the line energy is negligible, it is appropriate to consider large volumes of drops, typically comprised in between 50 and 150 μl, preferably in between 100 and 150 μl, but in this case the effects of gravity cannot be neglected.

An originality of the present invention is to develop a device 100 and a method 200 (or software or computer program product) based on measurements of capillary bridges between two parallel and horizontal plates 101 and 102. In this case, unlike sessile drops, the effects of gravity are relatively much weaker, especially if the distance $D$ between the plates 101 and 102 is small, typically comprised in between 0.5 and 5 mm, preferably in between 0.5 and 3 mm, even for large volumes of liquid, typically comprised in between 50 and 100 μl, preferably in between 50 and 150 μl.

It may be appropriate to firstly consider capillary bridges for very close parallel plates 101 and 102, typically separated from each other by a distance $D$ comprised in between 0.5 and 5 mm, preferably in between 0.5 and 1.5 mm, so as to have a significant spreading of the capillary bridge 1, i.e. for $y_c$ large. In this case, the last line energy term is negligible and the measurement of the macroscopic wetting angles $\theta_1$ and $\theta_2$ (See Fig. 1) by image processing makes it possible to precisely identify the difference between the surface tensions $\gamma_{sl}$ - $\gamma_{sg}$, the liquid-gas surface tension $\gamma_{lg}$ being known elsewhere, by instance by sessile drops method.

Once the difference between the surface tensions $\gamma_{sl}$ - $\gamma_{sg}$ has been determined, as it is an intrinsic property relative to the implemented plates 101 and 102, we may consider very sparsely spread capillary bridges 1, i.e. with small $y_c$, so as to have a contribution from the line energy important which will be next deduced by identification, owing to the knowledge of the difference between the surface tensions $\gamma_{sl}$ - $\gamma_{sg}$ as previously identified and to equation (14).

Experimental protocols with imposed volume and variable pressure

The evolution of the shape of the capillary bridge 1 may be filmed 230 by a camera (106 and if needed 107) and the images obtained are processed 240 with a computer program product, for instance a Matlab code, implementing an embodiment of the method 200 according to the second aspect of the present invention. Preferably, the device 100 used for this purpose comprises at least a microbalance 103, a telecentric light source 105 and a high-resolution camera 106, for instance one commercialized by Basler®.

For capillary bridges, the lower plate may be fixed on a support while the upper part may be fixed on another support which can move vertically thanks to a micro-positioning system to adjust the spacing D between said two plates.

The bottom plate 102 may be fixed on a support, that may be resting on the microbalance 103, while the top plate 101 may be fixed on another support which can move vertically thanks to a micro-positioning system 104 to adjust the distance D between said two plates 101 and 102.

Before depositing the liquid, for instance water, between the two horizontal plates 101 and 102, all surfaces may preferably be cleaned with ethanol, separated at the desired vertical distance $D$ and aligned on the same line between the light source 105 and the high-resolution camera 106.

To adjust camera alignment with parallel plates and telecentric light 105, a secondary camera 107 may be placed sensibly unaligned, for instance sensibly perpendicular, to the illumination axis to provide an unaligned view, for instance a sensibly perpendicular view.

Optical settings and light intensity of the telecentric light source 105 and/or at least one of the cameras 106 and 107 may also be adjusted to provide the best resolution of at least images taken by either of the two cameras.

Liquid deposition 210 aims to form the liquid capillary bridge 1 ; it may be done using a micro syringe or any deposition or injection system with calibrated volume delivery.

The evolution of the geometry of the formed bridge 1 over time or when the distance $D$ between the plates 101 and 102 varies is filmed 230 throughout the experiments. The abovementioned computer program product implementing an embodiment of the method 200 according to the second aspect of the present invention makes it possible to process 240 and 245 the images, calculate at least one associated geometric variable (See on fig. 1: contact angles $\theta_i$, gorge radius $y^*$ and wetting radii $y_{ci}$, with $i \in [1,2]$ indicating the corresponding plate among said two plates) and draw the corresponding profile to the theoretical solution of the Young Laplace equation (13).

Experimental protocols with imposed pressure and variable volume

A second series of experiments may consist of depositing 210 a fixed volume of water between the two plates 101 and 102 and increasing the distance $D$ between them (by using the micro-positioning system 104 of the device 100) during each experiment, at selected constant capillary pressure, $P = cte$.

A device for controlling the capillary pressure conformed or similar to that proposed in Gras et al., MS (2013) Study of capillary interaction between two grains: A new experimental device with suction control, Granular Matter, 15(1): 49-56, may be used for allowing experiments to be carried out at an imposed fixed pressure. In order to impose a capillary pressure difference $\Delta P$ at the liquid-gas interface, simply adjust the height of liquid in a tank of said device for controlling the capillary pressure so that the difference in height between the water level in the tank and that of the bridge corresponds always to the desired difference in pressure $\Delta p = \rho g \Delta h$. where $h$ represents the difference between the water level in the tank and that of the upper surface of the bottom plate.

As an alternative, the device 100 according to the first aspect of the invention, and more particularly the space surrounding the two plates may be placed in an hermetic tank into which the gas pressure can be controlled.

The evolution of the capillary bridge 1 may be recorded using the high-resolution camera 106 and the images obtained processed with a central processing unit 108 of the device 100.

Summary of the experimental protocols

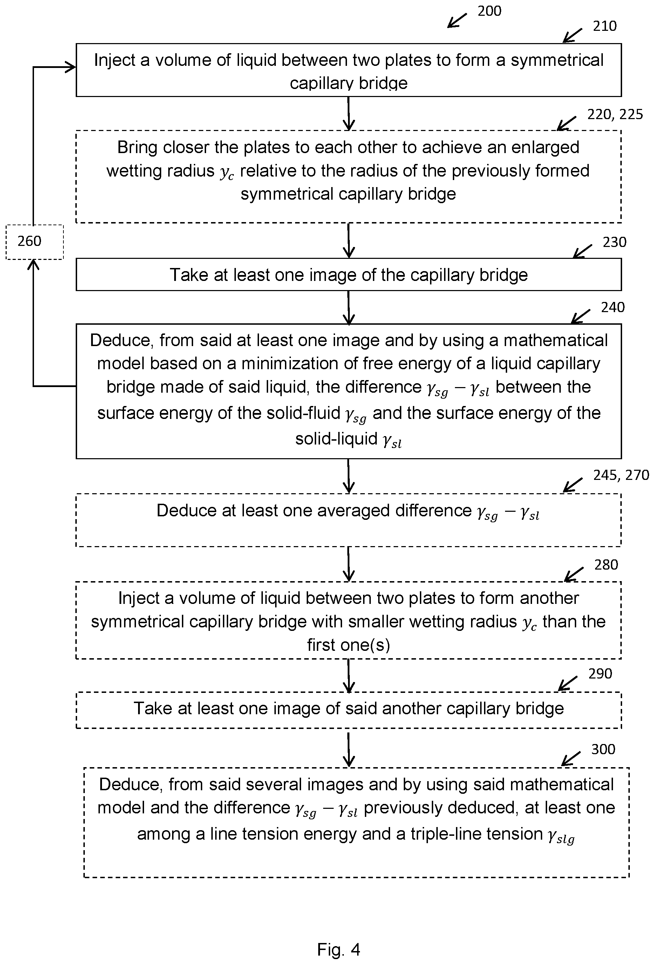

With reference to Figure 4, the experimental protocols can be summarized by the following steps:

- deposit 210 a large volume $V_0$ (See above indicated limits) of liquid between the two plates 101 and 102 maintained at a small distance $D$ (See above indicated limits) from each other to form a symmetrical capillary bridge 1. The volume $V_0$ of the bridge 1 is preferably sufficiently small (See above indicated limits) so that the gravity effects are negligible.
- bring 220 closer the plates 101 and 102 to each other to reduce the distance $D$ and to have a large wetting radius $y_c$ (See above indicated limits), so that the line energy term is negligible; and
- take 230 images of the formed capillary bridge 1 and deduce at least one of the macroscopic wetting angles $\theta_i$ by using said central processing unit 108 for implementing the computer program product according to the third aspect of the invention. From the measured value of the macroscopic wetting angles $\theta_i$, where it is supposed that $\theta_1 = \theta_2$, the computer program product identifies 240 the value of the difference between the surface tensions $\gamma_{sl} - \gamma_{sg}$.

The experimental protocols may further comprise the following step:

- Repeat 260 this procedure several times with smaller and/or larger volumes $V_0$ and calculate 270 the average value of the difference between the surface tensions $\gamma_{sl} - \gamma_{sg}$ which will be the result value.

In addition or as an alternative, the experimental protocols may further comprise the following step:

- Once the difference between the surface tensions $\gamma_{sl} - \gamma_{sg}$ is determined 240, repeat 280 and 290 the same experiments with small wetting radius y, (See above indicated limits) so as to have a significant contribution from the line energy (last term of equation (11)); and
- Measure macroscopic wetting angle $\theta_1$ and/or $\theta_2$ and identify 300 line energy to be able to identify the liquid-gas surface tension $\gamma_{lg}$ by considering equation (11).

It is worth noting that the material the plates are made thereof are not limited; they can be the same or different from the other. Each plate may be made of at least one among glass, steel and Teflon®, by instance. Thus the present invention can be applied to various industrial applications, notably in the field of thin layer(s) deposit(s) of paint(s), surface treatment(s), semiconductor(s), glass(es) (particularly for glazing), glue(s), etc.

The method 100 and its embodiments described herein may be implemented on any form of computer or computers, if needed except for the deposition (or injection) step(s). The components thereof may be implemented as dedicated applications or in client-server architectures, including a web-based architecture, and can include functional programs, codes, and code segments. Any of the computers may comprise a processor, a memory for storing program data and executing it, a permanent storage such as a disk drive, a communication port for handling communications with external devices, and user interface devices, including a display, keyboard, mouse, etc. When some software or algorithms are involved, they may be stored as program instructions or computer readable codes executable on the processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media can be read by the computer, stored in the memory, and executed by the processor.

For the purposes of promoting an understanding of the principles of various embodiments of the disclosure, reference may have been made to a preferred embodiment illustrated in the drawings, and specific language may have been used to describe this embodiment. However, no limitation of the scope of the disclosure is intended by this specific language, and the disclosure should be construed to encompass all embodiments that would normally occur to one of ordinary skill in the art.

The disclosure may be described in terms of functional block components and various processing steps. Such functional blocks may be realized by any number of hardware and/or software components configured to perform the specified functions. For example, the present disclosure may employ various integrated circuit components, e.g., memory elements, processing elements, logic elements, look-up tables, and the like, which may carry out a variety of functions under the control of one or more microprocessors or other control devices. Similarly, where the elements of the present disclosure are implemented using software programming or software elements the present disclosure may be implemented with any programming or scripting language such as C, C++, Java, Python, Matlab, assembler, or the like, with the various algorithms being implemented with any combination of data structures, objects, processes, routines or other programming elements. Functional aspects may be implemented in algorithms that execute on one or more processors. Furthermore, the present disclosure could employ any number of conventional techniques for electronics configuration, signal processing and/or control, image processing, data processing and the like.

**Claims**

1.  A device **(100)** for identifying wetting properties of a liquid via a liquid capillary bridge **(1)** made of said liquid, the device comprising:

    - two parallel and horizontal plates **(101, 102)**,
    - a micro-positioning system **(104)** configured to adjust a spacing between said two plates,
    - a telecentric light source **(105)** configured to illuminate the spacing between the two plates,
    - a high-resolution camera **(106)** configured to be sensibly oriented towards said spacing in an opposite direction relative to an optical axis **(1051)** of said telecentric light **(105)**, and
    - a central processing unit **(108)**,

       a top plate **(101)** among said two plates being configured together with said micro-positioning system **(104)** for adjusting a distance D between said two plates,
       the high-resolution camera **(105)** being configured for providing, to the central processing unit **(108)**, at least one image of the liquid capillary bridge formed between said two plates, and
       the processing unit **(108)** being configured to identify, in function of said at least one image and according to a model derived from a minimization of free energy of a liquid capillary bridge made of said liquid, with a fixed parameter chosen from among a volume $V$ and a capillary pressure $\Delta P$ of the liquid capillary bridge, at least the difference $\gamma_{sg} - \gamma_{sl}$ between the surface energy of the solid-fluid and the surface energy of the solid-liquid from among said wetting properties of the liquid, with said fluid surrounding the liquid capillary bridge.

2.  The device **(100)** according to claim 1, further comprising a microbalance **(103)**, a bottom plate **(102)** among said two plates being fixed on the microbalance **(103)** that is configured to measure a weight of the formed liquid capillary bridge **(1)** between said two plates.

3.  The device **(100)** according to any of claims 1 and 2, wherein at least one of said two plates is made of at least one among glass, steel and Teflon®.

4.  The device **(100)** according to any of claims 1 to 3, further comprising a secondary camera **(107)** configured to be sensibly oriented towards said spacing in an unaligned direction relative to the optical axis of said telecentric light source, the secondary camera **(107)** being configured for providing, to the central processing unit **(108)**, at least one image of the liquid capillary bridge formed between said two plates, the processing unit **(108)** being configured to identify difference $\gamma_{sg} - \gamma_{sl}$ between the surface energy of the solid-fluid and the surface energy of the solid-liquid further in function of said at least one image provided by said secondary camera **(107)**.

5.  The device **(100)** according to claim 4, further comprising a device **(109)** for controlling capillary pressure of the liquid capillary bridge, said device comprising a tank into which the height of liquid is adjustable so that the difference in height between the liquid level in the tank and that of the bridge corresponds always to the desired difference in pressure $\Delta p = \rho g \Delta h$, where h represents the difference between the liquid level in the tank and that of the upper surface of the bottom plate **(102)**.

6.  A method **(200) for** identifying wetting properties of a liquid via a liquid capillary bridge **(1)** made of said liquid, the method implementing a device **(100)** according to any of the preceding claims and comprising the following steps:

       a. deposit **(210)** a volume $V_0$ of liquid between the two plates of said device **(100)** maintained at a distance D from each other to form a symmetrical capillary bridge;
       b. take **(230)** at least one image of the capillary bridge; and
       c. deduce **(240)**, from said at least one image and by using a model derived from a minimization of free energy of a liquid capillary bridge made of said liquid, with a fixed parameter chosen from among a volume $V_0$ and a capillary pressure $\Delta P$ of the liquid capillary bridge, at least the difference $\gamma_{sg} - \gamma_{sl}$ between the surface energy of the solid-fluid $\gamma_{sg}$ and the surface energy of the solid-liquid $\gamma_{sl}$ from among said wetting properties of the liquid, with said fluid surrounding the liquid capillary bridge.

7.  The method according to the preceding claim, wherein, the step of deducing (240) said difference $\gamma_{sg} - \gamma_{sl}$ between the surface energy of the solid-fluid $\gamma_{sg}$ and the surface energy of the solid-liquid $\gamma_{sl}$ comprises the measurement of the value of at least one of the macroscopic wetting angles $\theta_1$ and $\theta_2$ at the top plate **(101)** and at the bottom plate (102), where $\theta_1$ may be supposed to be sensibly equal to $\theta_2$, in function of which said difference $\gamma_{sg} - \gamma_{sl}$ is deduced using said derived model, with the surface tension between the liquid and the gas $\gamma_{lg}$ being known.

8. The method according to any of the two preceding claims, wherein the step of deducing **(240)** said difference $\gamma_{sg} - \gamma_{sl}$ between the surface energy of the solid-fluid $\gamma_{sg}$ and the surface energy of the solid-liquid $\gamma_{sl}$ further comprises the measurement of at least one among: a gorge radius $y^*$ and at least one wetting radius $y_{c_1}$ and $y_{c_2}$ of the liquid capillary bridge at the level of the $i^{th}$ plate among the top plate **(101)** and the bottom plate **(102)**, where $y_{c_1}$ and $y_{c_2}$ are supposed to be sensibly equal to each other, and relative to a generatrix of the liquid capillary bridge.

9. The method according to any of the three preceding claims, wherein the volume $V_0$ is comprised in between 1 and 10 $\mu$l, preferably in between 1 and 5 $\mu$l.

10. The method according to any of the four preceding claims, wherein the volume $V_0$ is comprised in between 50 and 150 $\mu$l, preferably in between 100 and 150 $\mu$l.

11. The method according to any of the five preceding claims, wherein the distance D between the plates **(101)** and **(102)** is comprised in between 0.5 and 5 mm, preferably in between 0.5 and 3 mm.

12. The method according to any of the six preceding claims, wherein, during step a., the volume $V_0$ is comprised in between 0,5 and 10 $\mu$l, preferably in between 0.1 and 3 $\mu$l, and further comprising, after the deduction step **(240)**:

   - deposit **(280)** a volume $V_0$ of liquid comprised in between 1 and 10 $\mu$l, preferably in between 1 and 5 $\mu$l between the two plates of said device **(100)** maintained at the distance $D$ from each other to form another symmetrical capillary bridge;
   - take **(290)** at least one another image of said another capillary bridge; and
   - deduce **(300),** from said at least one another image and by using said derived model and the difference $\gamma_{sg} - \gamma_{sl}$ between the surface energy of the solid-fluid $\gamma_{sg}$ and the surface energy of the solid-liquid $\gamma_{sl}$ as previously deduced, at least one among a line energy and a triple-line tension $\gamma_{slg}$ among said wetting properties of the liquid.

13. The method according to any of the seven preceding claims, wherein said derived model is given by the following equation:

$$\cos(\theta) = \frac{\gamma_{sg} - \gamma_{sl}}{\gamma_{lg}} \pm \frac{\gamma_{slg}}{y(x_c)\gamma_{lg}} = 0,$$

where $\gamma_{sg}$ is the surface energy of the solid-fluid, $\gamma_{sl}$ is the surface energy of the solid-liquid, $\gamma_{slg}$ is the triple-line tension, where $\theta = \theta_1 = \theta_2$ is a macroscopic wetting angle of the capillary bridge at the top plate **(101)** and at the bottom plate **(102),** and where $y(x_c) = y(-x_c) = y_c = y_{c_1} = y_{c_2}$ is a wetting radius of the liquid capillary bridge as measured at the level of the top plate **(101)** and/or at the level of the bottom plate **(102)** and relative to a generatrix of the liquid capillary bridge.

14. The method according to any of the eight preceding claim, further comprising at least one of the following steps, after the deposition step **(210)**:

   - bring **(220)** closer the plates to each other to reduce the distance $D$ and to achieve an enlarged wetting radius $y_c$ relative to the radius of the previously formed symmetrical capillary bridge; and
   - let **(225)** the capillary bridge dry between the two plates placed at a fixed distance $D$, typically comprised in between 0.5 and 5 mm, preferably in between 0.5 and 3 mm,
   - the step **(230)** being repeated during at least one among the reduction of the distance $D$ and the drying of the liquid capillary bridge **(1)** for deducing **(245)** at least one averaged difference $\gamma_{sg} - \gamma_{sl}$ between the surface energy of the solid-fluid $\gamma_{sg}$ and the surface energy of the solid-liquid $\gamma_{sl}$.

15. The method according to any of the nine preceding claims, further comprising the following step:

   - repeat **(260)** at least steps **(210), (230)** and **(240)** of the method according to claim 1 with various volumes $V_0$ of the liquid capillary bridge;
   - calculate **(270)** an average value of the hence deduced differences $\gamma_{sg} - \gamma_{sl}$ between the surface energy of the solid-fluid $\gamma_{sg}$ and the surface energy of the solid-liquid $\gamma_{sl}$.

16. The method according to any of the ten preceding claims, wherein a distance D between the plates **(101)** and **(102)** is comprised in between 0.5 and 5 mm, preferably in between 0.5 and 3 mm, with volumes $V_0$ of the liquid capillary bridge, typically comprised in between 1 and 150 $\mu$l.

17. A computer program product comprising instructions which, when implemented by at least one digital processing device, performs at least ones among the step of the method **(200)** according to any of claims 6 to 16.

18. A use of the device according to any claims 1 to 5 for implementing the method **(200)** according to any of claims 6 to 16.

FIG. 1

FIG. 2

FIG. 3

200

210

Inject a volume of liquid between two plates to form a symmetrical capillary bridge

220, 225

Bring closer the plates to each other to achieve an enlarged wetting radius $y_c$ relative to the radius of the previously formed symmetrical capillary bridge

260

230

Take at least one image of the capillary bridge

240

Deduce, from said at least one image and by using a mathematical model based on a minimization of free energy of a liquid capillary bridge made of said liquid, the difference $\gamma_{sg} - \gamma_{sl}$ between the surface energy of the solid-fluid $\gamma_{sg}$ and the surface energy of the solid-liquid $\gamma_{sl}$

245, 270

Deduce at least one averaged difference $\gamma_{sg} - \gamma_{sl}$

280

Inject a volume of liquid between two plates to form another symmetrical capillary bridge with smaller wetting radius $y_c$ than the first one(s)

290

Take at least one image of said another capillary bridge

300

Deduce, from said several images and by using said mathematical model and the difference $\gamma_{sg} - \gamma_{sl}$ previously deduced, at least one among a line tension energy and a triple-line tension $\gamma_{slg}$

Fig. 4

# EP 4 563 971 A1

Europäisches
Patentamt

European
Patent Office

Office européen
des brevets

## EUROPEAN SEARCH REPORT

Application Number

EP 23 31 5444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/094846 A1 (ENERGIATUDOMANYI KUTATOKOEZPONT [HU]) 1 June 2023 (2023-06-01) * figure 2 * * claims 1,2 * | 1-18 | INV. G01N13/02 |
| Y | NGUYEN HIEN NHO GIA ET AL: "Effects of surface roughness on liquid bridge capillarity and droplet wetting", POWDER TECHNOLOGY, ELSEVIER, BASEL (CH), vol. 378, 8 October 2020 (2020-10-08), pages 487-496, XP086384445, ISSN: 0032-5910, DOI: 10.1016/J.POWTEC.2020.10.016 [retrieved on 2020-10-08] * figure 2 * | 1-18 | |

TECHNICAL FIELDS SEARCHED (IPC)

G01N

The present search report has been drawn up for all claims

| Place of search | Date of completion of the search | Examiner |
|---|---|---|
| The Hague | 24 April 2024 | Rasmusson, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# EP 4 563 971 A1

## ANNEX TO THE EUROPEAN SEARCH REPORT
## ON EUROPEAN PATENT APPLICATION NO.

EP 23 31 5444

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | Publication date | Patent family member(s) | Publication date |
|---|---|---|---|
| WO 2023094846 A1 | 01-06-2023 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GRAS et al.** Study of capillary interaction between two grains: A new experimental device with suction control. *Granular Matter*, 2013, vol. 15 (1), 49-56